# EUROPÄISCHE PATENTANMELDUNG

(11) **EP 1 002 760 A1**
(43) Veröffentlichungstag der Anmeldung: **24.05.2000**
(21) Anmeldenummer: 99116019.3
(22) Anmeldetag: 14.08.1999
(51) Int. Cl.: B66F 9/075, B62D 33/06, B60J 5/06

(54) **Kabine für Frontsitz-Flurförderzeuge**

(30) Priorität: 20.11.1998 DE 19853536
(71) Anmelder: Jungheinrich Aktiengesellschaft, 22047 Hamburg (DE)
(72) Erfinder: Niebuhr, Michael, 22941 Bargteheide (DE)
(74) Vertreter: Graalfs, Edo, Dipl.-Ing. Patentanwälte Hauck, Graalfs, Wehnert, Döring, Siemons

(57) **Zusammenfassung**

Kabine (18) für Frontsitz-Flurförderzeuge gekennzeichnet durch folgende Merkmale:
- das Flurförderzeug weist eine annähernd ebene Aufbaufläche (16) für eine Kabine (18) auf,
- die Kabine (18) befindet sich innerhalb der Außenkontur des Flurförderzeugs und ist im Grundriß an den Seiten konvex geformt wobei sich ihre Breite zum hinteren und vorderen Ende verringert und
- an mindestens einer Seite ist eine Schiebetür (38,40) vorgesehen, die so geführt ist, daß sie in der vollständig geöffneten Stellung (52,54) (Offenstellung) nicht über die Außenkontur des Flurförderzeugs hinaussteht.

## Beschreibung

Die Erfindung bezieht sich auf eine Kabine für Frontsitz-Flurförderzeuge.

Kleinere Frontsitz-Gabelstapler oder dergleichen werden selten mit Kabinen versehen, obwohl unstreitig ist daß eine Kabine einen Wetterschutz bildet und gegen Umwelteinflüsse, wie Staub, Schmutz oder Lärm schützt.

Flurförderzeuge mit Kabinen oder kabinenähnlichen Räumen weisen verschiedene Türausführungen auf. Bei Kabinen für kleinere Frontsitz-Gabelstapler werden Türen an der A- oder B-Säule angeschlagen. Die Türen können um etwa 90° geöffnet werden. Diese Ausführungsform hat den Nachteil, daß die Tür beim Öffnen die Gerätekontur verläßt und daher leicht beschädigt werden kann. Außerdem können im geschlossenen Zustand der Tür meistens nur relativ kleine Schiebefenster zur Belüftung geöffnet werden.

Größere Gabelstapler, Bau- oder Landmaschinen haben zumeist Kabinentüren, die sich um 180° öffnen lassen und in dieser Position arretiert werden können. Dadurch ist ein Betrieb in offener Türposition möglich. Bei größeren Fahrzeugen kommen auch Schiebetüren zum Einsatz, die innerhalb der Gerätekontur öffnen, wie etwa aus EP 0 612 637 A1 bekannt geworden. Aus G 86 19 102 ist auch bekannt, für Fahrzeuge flach öffnende Seitentüren in Form von segmentartigen Türen vorzusehen, die entlang von bogenförmigen Führungen geführt werden, wodurch die einen Achtelkreis ausmachenden Türflächen in einer vertikalen Ebene verschwenkt werden.

Die bekannten Kabinen bzw. deren Türausführungen haben den Nachteil, daß ein Aufbau auf kleinen Flurförderzeugen aus Gründen der Geometrie scheitert.

Der Erfindung liegt die Aufgabe zugrunde, eine Kabine für ein Frontsitz-Flurförderzeug zu schaffen, die kompakt ausgeführt ist und deren Tür in keiner Position über die Außenkontur des Fahrzeugs hinaussteht. Gleichwohl soll der Fahrer bzw. Bediener gute Sichtverhältnisse haben, auch nach hinten.

Diese Aufgabe wird durch die Merkmale des Patentanspruchs 1 gelöst.

Bei der erfindungsgemäßen Kabine ist diese auf einer annähernd ebenen Aufbaufläche des Flurförderzeugs angeordnet. Die Kabine selbst ist im Grundriß so ausgeführt, daß sie nicht über die Außenkontur des Flurförderzeugs hinaussteht und ihre Seiten konvex geformt sind. In der Breite verringert sie sich zum hinteren und vorderen Ende. An mindestens einer Seite ist eine Schiebetür vorgesehen, die so geführt ist, daß sie auch in der vollständig geöffneten Stellung (Offenstellung) nicht über die Außenkontur des Flurförderzeugs hinaussteht.

Durch die Grundrißgestalt der erfindungsgemäßen Kabine, die nach einer Ausgestaltung der Erfindung tropfenförmig ist ist der Bedienerplatz relativ eng umschlossen. Neben einem üblichen Sitz und der Pedalerie kann nach einer Ausgestaltung der Erfindung mindestens eine Bedienerkonsole vorgesehen werden, die vorzugsweise in eine Armstütze integriert ist. Bei einer Ausgestaltung der Erfindung kann die Kabine eine Breite von 980 mm und eine Länge von 1140 mm aufweisen. Dadurch ist gewährleistet daß ein Aufbau auch auf kleinen Geräten möglich ist. Das hintere Ende befindet sich dabei in ausreichend sicherer Entfernung von der Außenkontur des besonders kollisionsgefährdeten Heckbereichs.

Durch die enge Umbauung ergibt sich ein geringer Rauminhalt der Kabine. Folglich muß für die Heizungs- und Lüftungsvorgänge nur eine kleine Luftmenge umgewälzt werden.

Die mindestens eine Schiebetür bewegt sich vorzugsweise auf kreissegmentförmigen Schienen, so daß sie sich im geöffneten Zustand im Bereich dicht hinter dem Fahrersitz innerhalb der Fahrzeugkontur befindet. Zur Belüftung kann die Tür auch teilweise geöffnet werden, ohne dabei aus der Kabinenkontur vorzustehen. Die Verwendung von Schienen ermöglicht eine leichte Betätigung und auch Arretierung in Zwischenpositionen. Hierzu sind nach einer Ausgestaltung der Erfindung geeignete Arretiermittel vorgesehen. Wird die Schiebetür in einer Zwischenstellung arretiert und ist dabei die Arretierung mit der Freigabe des Antriebs gekoppelt, kann dadurch gewährleistet werden, daß der Fahrer aufgrund der nur teilweise geöffneten Kabinentür nicht herausfallen kann. Dadurch ersetzt eine derartige Kabine die Verwendung von sonstigen Rückhaltemitteln. Die Kabine weist naturgemäß ein Dach auf, das sich über Säulen am Fahrzeug abstützt. Nach einer Ausgestaltung der Erfindung weist der Rahmen für die Kabine zwei vordere Säulen und eine hintere mittige Säule für das Schutzdach auf Die hintere Säule kann besonders massiv ausgeführt sein und befindet sich vorzugsweise direkt hinter dem Fahrer, so daß kaum eine Sichteinschränkung auftritt.

Nach einer Ausgestaltung der Erfindung ist die Innenfläche der Säule als gepolsterte Kopfstütze ausgebildet. Die vorderen Säulen befinden sich in leicht nach innen gerückter Position, so daß sie nach einer Ausgestaltung der Erfindung im Schatten des Mastes einer Lasthebevorrichtung liegen und dadurch fast keine Sichteinschränkung bewirken.

Nach einer weiteren Ausgestaltung der Erfindung ist die erfindungsgemäße Kabine um eine vertikale Achse drehbar gelagert. Die Verdrehung kann mit Hilfe eines elektromotorischen oder hydraulischen Drehantriebs erfolgen. Die Führung und Lagerung für die Verdrehung kann herkömmlich ausgebildet sein. Vorzugsweise ist eine Drehwegbegrenzung dergestalt vorgesehen, daß die Kabine bei der Drehung aus der Normalposition heraus bei einem Drehwinkel begrenzt wird, daß sie die Außenkontur des Flurförderzeuges nicht verläßt.

Nach einer anderen Ausgestaltung der Erfindung kann die Rückenlehne des Fahrersitzes einen Sensor enthalten, der ein Nachhintendrehen des Fahrers erfaßt und ein Steuersignal auf den Drehantrieb gibt Dieser kann die Kabine automatisch um einen vorgegebenen Winkel verschwenken, so daß der Fahrer bei Rückwärtsfahrt eine ergonomisch günstige Position einnimmt.

Nach einer anderen Ausgestaltung der Erfindung kann ein weiterer Sensor vorgesehen sein, der feststellt ob die Kabine aus der Nullposition herausgedreht ist. In diesem Fall erzeugt der Sensor ein Blockiersignal für die Arretiermittel. Dadurch wird verhindert, daß eine zum Beispiel geschlossene oder teilweise geöffnete Schiebetür geöffnet wird. Der Fahrer kann mithin nur in der Normalposition der Kabine diese verlassen.

Die Erfindung wird anhand eines in den Zeichnungen dargestellten Ausführungsbeispiels näher erläutert.
- Fig. 1: zeigt in Seitenansicht schematisch eine Kabine nach der Erfindung auf einem Gabelstapler.
- Fig. 2: zeigt die Draufsicht auf die Anordnung nach Fig. 1.
- Fig. 3: zeigt eine ähnliche Darstellung wie Fig. 2, jedoch ohne Fahrer.
- Fig. 4: zeigt eine ähnliche Darstellung wie Fig. 2, jedoch bei gedrehter Kabine.

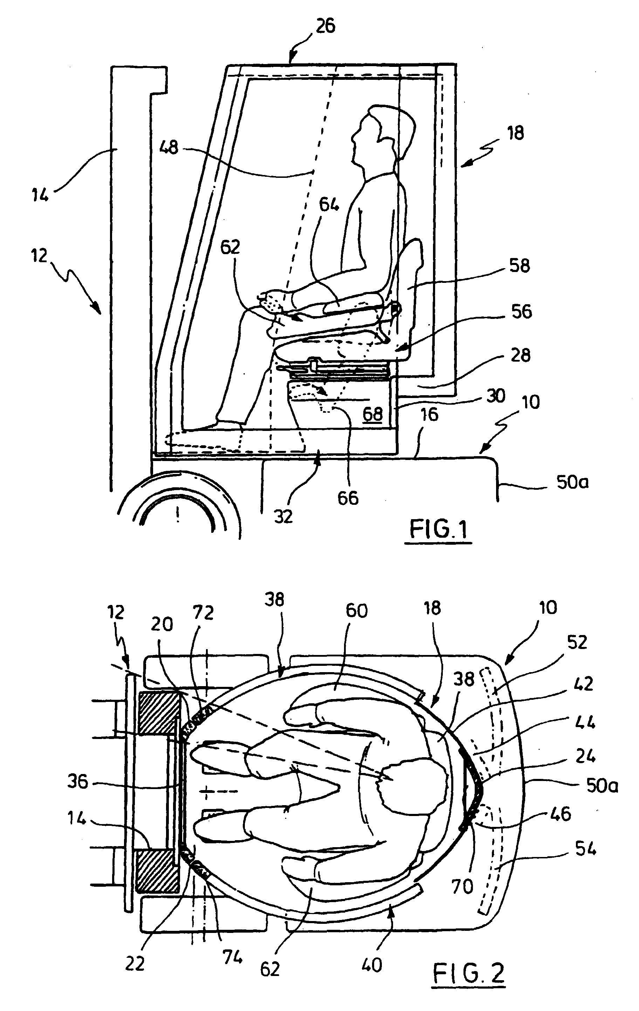

Das in Fig. 1 bis 4 angedeutete Flurförderzeug (Frontsitz-Gabelstapler) weist einen Antriebsteil 10 und einen Lasthebeteil 12 mit einem Mast 14 auf. Ein derartiges Flurförderzeug ist an sich bekannt. Im vorliegenden Fall ist die Oberseite des Antriebsteils 10 mit einer annähernd ebenen horizontalen Aufbaufläche 16 versehen, auf der eine Kabine 18 angeordnet ist. Die Kabine 18 ist nachstehend Gegenstand der Beschreibung weiterer Einzelheiten.

Wie aus den Figuren 1 bis 4 ferner hervorgeht, weist die Kabine zwei vordere Säulen 20, 22 und eine hintere Säule 24 auf. Sie erstrecken sich nach oben und tragen ein in Fig. 1 nur allgemein mit 26 bezeichnetes Schutzdach. Die Säulen 20 und 22 sind im unteren Bereich annähernd vertikal und erstrecken sich nach oben in kleinem Winkel nach hinten (Fig. 1). Die hintere Säule 24, die mittig angeordnet ist, erstreckt sich im oberen Bereich vertikal und weist oberhalb der Aufbaufläche einen horizontalen Abschnitt 28 auf, der sich über einen unteren vertikalen Abschnitt 30 ebenso wie die vorderen Säulen 20, 22 auf einem allgemein mit 32 bezeichneten Bodenrahmen der Kabine 18 abstützt.

Wie aus den Figuren 2 bis 4 deutlich wird, ist der Grundriß der Kabine 18 von annähernd tropfenförmiger Gestalt wobei das hintere Ende an das stumpf winklige Profil der Säule 24 angepaßt ist. Am vorderen Ende ist der Grundriß entlang einer Querachse abgestumpft. Der Abstand der Säulen 20, 22 bildet das Ausmaß der Querausdehnung der Kabine 18 in diesem Bereich. Zwischen den Säulen ist eine Sichtscheibe 36 angeordnet.

Wie aus den Figuren 2 bis 4 ferner hervorgeht, wird ein großer Teil der Seiten der Kabine 18 von bogensegmentförmigen, konvexen Schiebetüren 38, 40 gebildet, die in den Figuren 2 bis 4 im geschlossenen Zustand dargestellt sind. Sie grenzen in dieser Position an die vorderen Säulen 20, 22 an. Die Türen 38, 40 sind zum großen Teil aus durchsichtigem Material dargestellt.

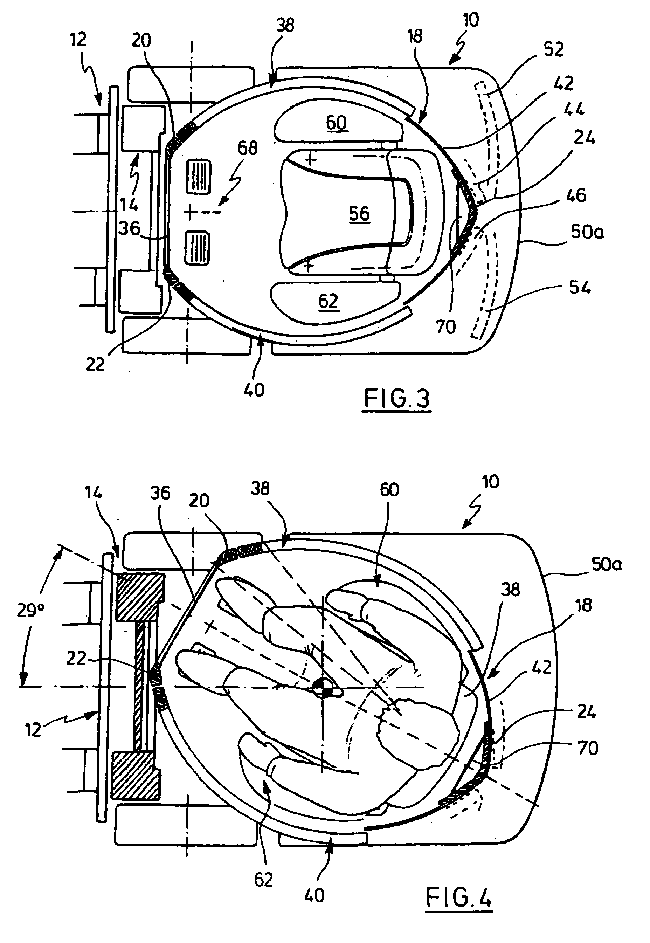

Im hinteren Bereich wird die Kabine von einem durchsichtigen Wandabschnitt 42 gebildet beidseits der hinteren Säule 24. Die Türen 38, 40 werden von kreissegmentförmigen Führungen geführt (nicht gezeigt) dergestalt, daß sie sich beim Öffnen eng entlang des hinteren Abschnitts 42 der Kabine bewegen. Bei 44 bzw. 46 ist eine halb offene Position beider Türen 38, 40 angedeutet. Diese Position ist in Fig. 1 durch die gestrichelte Linie 48 angedeutet. Wird die Tür 38 vollständig aufgeschoben, ergibt sich ihre Lage durch die strichpunktierte Andeutung in den Figuren 2 und 3 bei 52. Bezüglich der Schiebetür 40 ergibt sich ihre endgültige Offenstellung durch die strichpunktierte Andeutung 54. Es versteht sich mithin, daß nur eine der beiden Schiebetüren komplett geöffnet werden kann. In jedem Fall befinden sich die Türen 38, 40 innerhalb der Außenkontur des Flurförderzeugs 10, unabhängig davon, welche Position sie jeweils einnehmen. Man erkennt ferner, daß die hintere Säule 24, welche zugleich das hintere Ende der Kabine 18 bildet, einen relativ großen Abstand zum Heckende 52 des Fahrzeugs aufweist.

In der Kabine 18 befindet sich ein Sitz 56, an dessen Rückenlehne 58 beidseits Konsolen 60, 62 angelenkt sind. Die Konsolen weisen zugleich einen Unterarmabstützabschnitt auf, der in Fig. 1 bei 64 angedeutet ist. Die Konsolen sind mit elektrischen Bedienelementen für das Flurförderzeug versehen, beispielsweise Multipilot und Daumenlenkrad. Die Konsolen 60, 62 können seitlich nach unten geklappt werden, wie dies bei 66 in Fig. 1 angedeutet ist. Sie ermöglichen das seitliche Ein- und Aussteigen des Fahrers.

Der Sitz 56 ist auf einem Podest 68 angebracht, der seinerseits auf dem Rahmen 32 ruht.

Man erkennt, daß der Fahrer bzw. der Fahrersitz durch die Kabinenwandung der Kabine 18 relativ eng umschlossen ist. Gleichwohl hat der Fahrer ausreichende Bewegungsmöglichkeiten, auch zur Betätigung der Pedalerie 68, wie sie insbesondere in Fig. 3 zu erkennen ist. Die Vorderseite der hinteren Säule 24 ist mit einem Kopfpolster 70 versehen.

Insbesondere aus Fig. 2 ist zu erkennen, daß die Säulen 20, 22 einschließlich der vertikalen Rahmenabschnitte 72, 74 der Türen 38, 40 im Sichtschatten der Stützen des Mastes 14 liegen, mithin den Sichtbereich nicht mehr einschränken, als dies durch den Mast 14 der Fall ist.

Wie aus Fig. 4 zu erkennen, ist die Kabine 18 um eine vertikale Achse, die annähernd durch die Mitte der Kabine 18 hindurchgeht, verschwenkbar. In Fig. 4 ist die Verschwenkung uni einen Winkel von 29° angedeutet. Die Verschwenkung wird bei diesem Winkel begrenzt, damit vermieden wird, daß die Kabine aus der Außenkontur des Fahrzeugs 10 herausbewegt wird. Der nicht gezeigte Antrieb für die Drehung der Kabine 18 kann elektromotorisch oder hydraulisch sein. Auch die Führungen, die auf dem Fahrzeug vorgesehen sind für die Abstützung und Führung der Kabine 18 beim Verschwenkvorgang, sind gleichfalls nicht dargestellt. Die Verdrehmöglichkeit verbessert die Sicht des Fahrers zum Beispiel bei der Rückwärtsfahrt. Zu diesem Zweck kann in der Rückenlehne 38 ein nicht gezeigter Sensor eingebaut sein, der feststellt, wenn der Fahrer sich mehr oder weniger umdreht, um eine Sicht nach hinten zu erhalten. Der Sensor bewirkt dann ein Steuersignal für den Schwenkantrieb und verschwenkt die Kabine 18 automatisch etwa in die in Fig. 4 dargestellte Position.

Wie schon erwähnt, können die Türen 38, 40 teilweise geöffnet werden, auch während der Fahrt, um eine gute Belüftung der Kabine 18 zu ermöglichen. Die für die Türen 38, 40 vorgesehene, jedoch nicht gezeigte Arretierung zur Feststellung der Türen in einer Zwischenstellung kann bewirken, daß zum Beispiel während der Drehstellung nach Fig. 4 ein vollständiges Öffnen der Türen 38, 40 nicht möglich ist. Erst wenn die Normalposition eingenommen ist, kann eine der Türen ganz geöffnet werden, um dem Fahrer das Aussteigen zu ermöglichen. Ferner kann die Arretiervorrichtung so ausgestaltet sein, daß ein vollständiges Öffnen der Türen 38, 40 blockiert ist, solange das Fahrzeug fährt. Umgekehrt kann der Fahrbetrieb nicht eingeleitet werden, wenn eine der Türen noch ganz geöffnet ist.

Zusammengefaßt hat die beschriebene Kabine folgende Vorteile.

Sie ermöglicht einen Schutz vor Wetter- und Umwelteinflüssen auch bei kleinen Frontsitz-Flurförderzeugen. Die Türen befinden sich immer innerhalb des Grundrisses des Fahrzeugs, ein Abfahren wird dadurch vermieden. Während des Betriebes ermöglichen die Türen ausreichend große Belüftungsöffnungen durch ein teilweises Öffnen. Die Sichtverhältnisse für den Bediener in der Kabine sind außerordentlich gut. Die Kabine 18 weist ein geringes Innenraumvolumen für eine schnelle Heizungs- und Kühlungsmöglichkeit auf. Das Anlegen eines Sicherheitsgurtes oder dergleichen erübrigt sich, solange die Türen ganz oder teilweise geschlossen sind.

## Patentansprüche

1. Kabine für Frontsitz-Flurförderzeuge gekennzeichnet durch folgende Merkmale:
- das Flurförderzeug weist eine annähernd ebene Aufbaufläche (16) für eine Kabine (18) auf,
- die Kabine (18) befindet sich innerhalb der Außenkontur des Flurförderzeugs und ist im Grundriß an den Seiten konvex geformt wobei sich ihre Breite zum hinteren und vorderen Ende verringert und
- an mindestens einer Seite ist eine Schiebetür (38, 40) vorgesehen, die so geführt ist, daß sie in der vollständig geöffneten Stellung (Offenstellung) nicht über die Außenkontur des Flurförderzeugs hinaussteht.

2. Kabine nach Anspruch 1, dadurch gekennzeichnet, daß das hintere Ende der Kabine (18) zur Außenkontur (50a) des Heckbereichs des Flurförderzeugs einen Abstand aufweist.

3. Kabine nach Anspruch 1 oder 2, dadurch gekennzeichnet, daß ein Rahmen für die Kabine (18) zwei vordere Säulen (20, 22) und eine hintere mittige Säule (24) für das Schutzdach (26) aufweist.

4. Kabine nach einem der Ansprüche 1 bis 3, dadurch gekennzeichnet, daß der Grundriß der Kabine (18) tropfenförmig ist.

5. Kabine nach einem der Ansprüche 1 bis 4, dadurch gekennzeichnet, daß die Schiebetür (38, 40) durch segmentförmige Schienen geführt bzw. gelagert ist.

6. Kabine nach einem der Ansprüche 1 bis 5, dadurch gekennzeichnet, daß die Schiebetür (38, 40) in der Schließstellung an der vorderen Säule (20, 22) angrenzt.

7. Kabine nach einem der Ansprüche 1 bis 6, dadurch gekennzeichnet, daß Arretiermittel für die Schiebetür (38, 40) vorgesehen sind, durch welche die Schiebetür (38, 40) in Zwischenstellungen feststellbar ist.

8. Kabine nach einem der Ansprüche 1 bis 7, dadurch gekennzeichnet, daß ein Sensor vorgesehen ist, der feststellt, ob die Schiebetür (38, 40) zumindest teilweise geschlossen ist und ein entsprechendes Freigabesignal erzeugt und der Fahrbetrieb des Flurförderzeugs gesperrt wird, wenn kein Freigabesignal erzeugt wird.

9. Kabine nach einem der Ansprüche 3 bis 8, dadurch gekennzeichnet, daß die Innenseite der hinteren Säule (24) mit einer Polsterung (70) versehen ist.

10. Kabine nach einem der Ansprüche 3 bis 9, dadurch gekennzeichnet, daß die vorderen Säulen (20, 22) so angeordnet sind, daß sie im Sichtschatten eines Mastes (14) einer Lasthebevorrichtung (12) am Flurförderzeug liegen.

11. Kabine nach einem der Ansprüche 1 bis 10, dadurch gekennzeichnet, daß sie um eine vertikale Achse drehbar gelagert ist.

12. Kabine nach Anspruch 11, dadurch gekennzeichnet, daß eine elektromotorischer oder hydraulischer Drehantrieb vorgesehen ist.

13. Kabine nach Anspruch 11 oder 12, gekennzeichnet durch eine Drehwegbegrenzung dergestalt, daß die Kabine (18) bei der Drehung aus der Normalposition die Außenkontur des Flurförderzeugs nicht verläßt.

14. Kabine nach einem der Ansprüche 1 bis 13, dadurch gekennzeichnet, daß die Rückenlehne (58) eines Sitzes (56) einen Sensor enthält, der ein Nachhintendrehen des Fahrers erfaßt und ein Steuersignal auf den Drehantrieb gibt.

15. Kabine nach Anspruch 5 und einem der Ansprüche 11 bis 14, dadurch gekennzeichnet, daß ein weiterer Sensor vorgesehen ist, der feststellt, ob die Kabine (18) aus der Normalposition herausgedreht ist und ein Blockiersignal für die Arretiermittel erzeugt.

16. Kabine nach einem der Ansprüche 1 bis 15, dadurch gekennzeichnet, daß mindestens eine Armlehne des Fahrersitzes (56) als Bedienkonsole (60, 62) ausgebildet ist.

17. Kabine nach einem der Ansprüche 1 bis 16, dadurch gekennzeichnet, daß mindestens eine Armlehne (60, 62) des Fahrersitzes (56) abklappbar ausgebildet ist.
